Europäisches Patentamt

European Patent Office

Office européen des brevets

(19)

(11) Veröffentlichungsnummer: **0 211 103**
**B1**

(12) **EUROPÄISCHE PATENTSCHRIFT**

(45) Veröffentlichungstag der Patentschrift:
**18.01.89**

(51) Int. Cl.⁴: **E01C 7/18**

(21) Anmeldenummer: **85112494.1**

(22) Anmeldetag: **03.10.85**

(54) Verfahren zur Erzeugung von Belagmaterial für Strassendecken.

(43) Veröffentlichungstag der Anmeldung:
**25.02.87 Patentblatt 87/9**

(45) Bekanntmachung des Hinweises auf die Patenterteilung:
**18.01.89 Patentblatt 89/3**

(84) Benannte Vertragsstaaten:
**AT CH DE FR IT LI**

(56) Entgegenhaltungen:
**DE-A- 2 454 803**
**DE-B- 1 199 680**
**DE-B- 2 418 977**
**FR-A- 2 102 794**
**GB-A- 2 144 144**
**US-A- 4 410 367**

(73) Patentinhaber: **Wilhelm Schutz KG,**
**D-6290 Weilburg 2(DE)**

(72) Erfinder: **Holly, Adolf, Taunusstrasse 22,**
**D-6294 Weinbach-Gräveneck(DE)**

(74) Vertreter: **Blumbach Weser Bergen Kramer Zwirner**
**Hoffmann Patentanwälte, Sonnenbergerstrasse 43,**
**D-6200 Wiesbaden 1(DE)**

## Beschreibung

Die Erfindung bezieht sich auf ein Verfahren zur Erzeugung von Belagmaterial für Straßendecken und dergleichen mit den Merkmalen des Oberbegriffs des Anspruchs 1 sowie auf ein nach dem Verfahren hergestelltes Belagmaterial.

Bei einem bekannten Verfahren dieser Art (DE-A 1 199 680) wird das Gesteinsmaterial im erhitzten Zustand zuerst mit einem hydrophoben, weitgehend mineralölunlöslichen, festen Überzug aus organischen, schmelzbaren Stoffen, vorzugsweise Steinkohlenteerpech, natürlichen Harzen, Kunstharzen, versehen und dann mit dem Bindemittel, bestehend aus einem diesen Überzug nicht lösenden Kohlenwasserstoffgemisch, vorzugsweise Erdöl-Bitumen, umhüllt. Die Herstellung einer derartigen Umhüllung des Gesteinsmaterials ist nicht einfach und setzt die Anwendung von Lösungsmittel voraus, welches ausgetrieben werden sollte, bevor das Bitumen zugegeben wird. Steinkohlenteerpech ist ferner ein relativ teures Material, so daß das bekannte Verfahren in der Praxis nicht anzutreffen ist.

Bei einem weiteren vorbekannten Verfahren nach dem Oberbegriff (DE-A 2 418 977) besteht das Ummantelungsmaterial aus zerkleinerten, thermoplastischen Polymerisaten, wobei Polyäthylen, Polypropylen, Polybutylen, Polyvinylchlorid, Polyamide, thermoplastische Polyester und Polyacrylate genannt worden sind, die sämtlich relativ hart sind, verglichen mit einem Schmelzkleber, der eine halbharte bis weiche Konsistenz hat und bei erhöhter Temperatur zum Kleben neigt. Die bituminösen Bestandteile werden in einer Menge von höchstens 100 Gew.-%, bezogen auf das Gewicht der polymeren Bestandteile, eingesetzt. Der große Gehalt an relativ harten Polymeren führt in der Praxis beim Einbau des Belags zu Verarbeitungsschwierigkeiten wegen schlechten Fließverhaltens. Ferner muß mit einer unerwünschten Erhöhung der Härte des Belags gerechnet werden, d.h. die Relaxion thermisch und mechanisch induzierter Spannungen in der Straßendecke findet kaum statt. Viele der vorgeschlagenen Kunststoffe, beispielsweise Polyäthylen, neigen zum Schrumpfen infolge von Kristallisation, was die Rißbildung im Winter begünstigt.

Bei einem weiteren vorbekannten Verfahren der oberbegrifflichen Art (DE-A 2 454 803) werden ebenfalls zerkleinerte Polymerisate zur Umhüllung der Mineralbestandteile verwendet, und zwar in Mengen von höchstens 100 Gew.-%, bezogen auf die Gewichtsmenge des Bitumens. Es treten die gleichen Probleme und Nachteile auf, wie zuvor angedeutet.

Der Erfindung liegt die Aufgabe zugrunde, ein Belagmaterial anzugeben, welches eine hohe Verformungsbeständigkeit bei sommerlichen Temperaturen aufweist, ohne der Gefahr der Rißbildung bei winterlichen Temperaturen zu unterliegen.

Gemäß Erfindung besteht das Ummantelungsmaterial, welches bei Raumtemperatur halbhart bis weich ist und bereits bei erhöhter Temperatur zum Kleben neigt, aus amorphen Polyolefinen, die als Copolymere von $\alpha$-Olefinen mit ausgewählten Monomeren folgende Parameter aufweisen:

Schmelzviskosität etwa 8000 mPa s (mit dem Rotationsviskometer bei etwa 190°C gemessen),
Erweichungspunkt etwa 105°C (mit Ring und Kugel nach DIN 52011 gemessen),
Penetration 20 (entsprechend DIN 52010),
Brechpunkt −30°C (gemessen nach Fraaß, DIN 52012); die Zugabemenge des Ummantelungsmaterials beträgt etwa 7% des Gesamtbindemittelgehaltes des Belagmaterials.

Bei der Erfindung wird die Haftung des Bindemittels am Mineral erheblich verbessert, so daß mit dem neuen Belagmaterial hergestellte Straßendecken eine erhöhte Resistenz gegen Abrieb und Abnutzung zeigen. Insbesondere ist das Mineralkorn gegen Ausbruch geschützt. Da die Konsistenz der amorphen Polyolefine halbhart bis weich ist, wird die Viskosität des Belagmaterials gegenüber den üblichen Werten nicht verschlechtert. Die Viskosität bleibt in der Kälte relativ niedrig, woraus sich ein relativ gutes Relaxionsverhalten auch in der Kälte ergibt und die Gefahr der Rißbildung weitgehend vermieden wird.

Um das erhitzte, körnige Mineral zu umhüllen, werden die amorphen Polyolefine auf eine Temperatur im Bereich zwischen 155 und 185°C gebracht. Je höher die Temperatur ist, um so flüssiger wird das Ummantelungsmaterial und um so besser läßt es sich anwenden. Wenn die Temperatur zu hoch ist, tritt jedoch die Gefahr der Verbrennung auf. Deshalb wird die Anwendungstemperatur etwa von 180°C bevorzugt.

Die Mischzeit zwischen dem Ummantelungsmaterial und dem erhitzten Mineral liegt im Bereich zwischen 5 und 30 sec. Bei relativ stärker erhitztem Mineral kann eine kürzere Mischungszeit angewendet werden. Eine bevorzugte Mischzeit beträgt etwa 10 sec.

Das dem Belagmaterial zugesetzte Bitumen hat vorzugsweise die Qualität B80. Solches Material neigt nicht zu Sprödigkeitsrissen. Durch die erfindungsgemäße Behandlungsart wird aber ein Belagmaterial erzeugt, welches hinsichtlich seiner Härte und Abriebfestigkeit das Verhalten eines Belagmaterials mit Bitumenqualität B65 hat, ohne die Gefahr von Sprödigkeitsrissen aufzuweisen.

Die Erfindung bezieht sich auch auf Belagmaterial, hergestellt nach dem erfindungsgemäßen Verfahren.

Ein Ausführungsbeispiel der Erfindung wird anhand der Zeichnung beschrieben. Dabei zeigt:
Fig. 1 eine Mischanlage und
Fig. 2 einen Probenquerschnitt in schematischer Darstellung.

Körniges Mineral unterschiedlicher Beschaffenheit wird in einer Reihe von Behältern 1, 2, 3 gelagert und kann daraus entnommen sowie über ein Förderband 4 einer Heizeinrichtung 5 zugeführt werden.

Die Heizeinrichtung 5 besteht beispielsweise aus einer rotierenden Trommel und einem Gasbrenner. Über ein weiteres Fördergerät 6, welches als Becherwerk ausgebildet sein kann, wird das erhitzte körnige Mineral einer Reihe von Siebtaschen 7 zugeführt, in denen sich das Mineral nach Siebkurven sammelt, von wo es in ein Wiegegefäß 8 dosiert übernommen wird. Temperaturfühler (nicht dargestellt) regeln die Heizeinrichtung 5, so daß das Mineral im Wiegegefäß 8 etwa 180°C annimmt. Der Austrag des Wiegegefäßes 8 mündet in einen Mischer 9.

Ein gekühltes Silo 10 enthält granuliertes Ummantelungsmaterial, welches ein Mischprodukt aus amorphen Polyolefinen ist, die als Copolymere von α-Olefinen mit ausgewählten Monomeren angesprochen werden können. Dieses Mischprodukt ist bei Raumtemperatur halbhart bis weich und neigt bei etwa erhöhten Temperaturen zum Kleben. Im Bereich von 155 bis 185°C ist es dünnflüssig.

Die angesprochenen amorphen Polyolefine können unter der Handelsbezeichnung "Vestoplast" von den Chemischen Werken Hüls AG, D-4370 Marl, in verschiedenen Standardtypen bezogen werden. Für den vorgesehenen Zweck eignet sich besonders der Typ "Vestoplast 708", welcher folgende physikalische und mechanische Eigenschaften hat: Die Schmelzviskosität bei 190°C, gemessen mit dem Rotationsviskometer, beträgt etwa 8000 mPas. Der Erweichungspunkt, gemessen nach DIN 52011 mit Ring und Kugel, beträgt etwa 105°C. Die Penetration 100/25/5 in Anlehnung an DIN 52010, gemessen in 0,1 mm, beträgt etwa 20. Der Brechpunkt nach Fraaß DIN 52012 beträgt etwa –30°C. Wegen seines amorphen Charakters besitzt "Vestoplast" keinen scharfen Schmelzpunkt, sondern einen Erweichungsbereich. Die Viskosität der Schmelze fällt wie bei allen Thermoplasten mit steigender Temperatur.

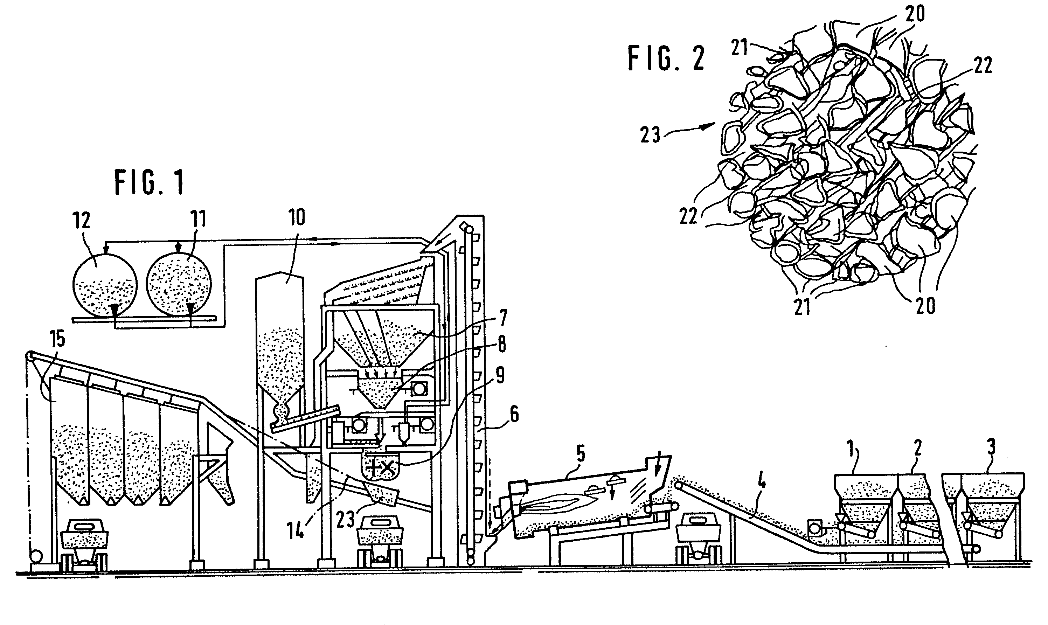

Die Zugabemenge der modifizierten amorphen Polyolefine beträgt etwa 7% des Gesamtbindemittelgehalts des herzustellenden Belagmaterials. Wenn ein geringerer Anteil gewählt wird, werden die günstigen Wirkungen weniger gut erzeugt, und wenn der Anteil höher liegt, sind die Ergebnisse nicht proportional besser, d.h. ein erhöhter Anteil an amorphen Polyolefinen lohnt sich nicht. Die Mischungszeit der modifizierten Polyolefine mit dem körnigen Mineral 20 (Fig. 2) beträgt etwa 10 sec. Danach haben sich die verflüssigten Polyolefine als Schicht 21 über das Mineralkorn 20 verteilt.

In dem Behälter 11 bzw. 12 sei verflüssigtes Bitumen enthalten, welches nunmehr in der benötigten Menge (93% des Bindemittelgehalts des Belagmaterials) dem Mischer 9 zugeführt wird. Dort erfolgt die Durchmischung in der üblichen Zeit von beispielsweise 30 sec. Das Bitumen, in Fig. 2 bei 22 dargestellt, umhüllt nochmals die Körner 20/21, wobei sich in dem Belagmaterial 23 noch Lücken finden. Das Belagmaterial 23 wird über eine Transporteinrichtung 14 einer Reihe von Silos 15 zugeführt, wo es für den Weitertransport zu Baustellen bereitgehalten wird.

Anstelle des gekühlten Silos 10 kann auch ein heizbarer Behälter zur Aufnahme der modifizierten amorphen Polyolefine verwendet werden. Diese werden dann in verflüssigter Form, z.B. auf 180°C aufgeheizt, in das Wiegegefäß 8 oder den Mischer 9 gepumpt.

Es ist ferner möglich, das Umhüllungsmaterial als Granulat in abgewogenen Dosen der Charge zuzugeben, wenn sich diese im Wiegegefäß 8 oder in dem Mischer 9 befindet.

3

| | Lieferkörnung | Gew.-% |
|---|---|---|
| 1. Kalksteinmehl | | 12 |
| 2. Basalt-Edelbrechsand | 0/2 | 14 |
| 3. Basalt-Edelsplitt | 2/5 | 9 |
| 4. Basalt-Edelsplitt | 8/11 | 50 |
| 5. Gabbro-Edelsplitt (Aufhellung) | 5/8 | 15 |

Siebanalyse

| mm | <0,09 | 0,25 | 0,71 | 2 | 5 | 8 | 11,2 | 16 | Summe |
|---|---|---|---|---|---|---|---|---|---|
| Gew.-% | 11,5 | 3,2 | 3,3 | 7,5 | 11,0 | 16,3 | 45,9 | 1,3 | 100.0 |
| Siebdg.-% | 11,5 | 14,7 | 18,0 | 25,5 | 36,5 | 52,8 | 98,7 | 100,0 | |
| | Füller | Sand = 14,0 Gew.-% | | | Anteile über 2 mm = 74,5 Gew.-% | | | | |

Rohdichte des Mineralgemisches, 25 °C, 2,950 g/cm$^3$

| | | |
|---|---|---|
| Bindemittelsorte: | 93 % B 80 +<br>7 % Vesto-<br>plast | |
| Bindemittelanteil auf 100 Gew.-Tle. Mineral | Gew.-Tle. | 6,4 |
| Bindemittelgehalt im gesamten Mischgut | Gew.-% | 6,0 |
| Eigenschaften am Marshallkörper: | | |
| Raumdichte | g/cm$^3$ | 2,557 |
| Mineralanteil | Vol.-% | 81,5 |
| Bindemittelanteil | Vol.-% | 15,1 |
| Hohlraum (ber.) | Vol.-% | 3,4 |
| Rohdichte des Mischgutes (ber.) | g/cm$^3$ | 2,647 |
| Hohlraum des Mineralgerüstes | Vol.-% | 18,5 |
| mit Bindemittel ausgefüllt | % | 82 |
| Stabilität bei 60 °C | KN | 6,3 |
| Fliesswert bei 60 °C | $^1$/10 mm | 30–50 |

| Marshalltest | (Erfindung) | Normaler Asphalt Feinbeton o/11 *) |
|---|---|---|
| Belastungszeit (min) | Eindringtiefe (mm) | Eindringtiefe (mm) |
| 1 | 0,1 | 0,3 |
| 10 | 0,1 | 0,8 |
| 15 | 0,1 | 1,6 |
| 20 | 0,1 | Zerfall |
| 30 | 0,1 | |
| 60 | 0,1 | |
| 300 | 0,1 | |

*) zum Vergleich St. d. Technik

Der Einbau des Belagmaterials in Straßen erfolgt in der üblichen Weise und muß nicht mehr beschrieben werden. Die erzeugten Fahrbahndecken zeigen eine erhöhte Stabilität und Haltbarkeit gegenüber Fahrbahndecken ohne den Gehalt an Polyolefinen, wird der vorstehende Versuch mit einem ausgeformten Marshall-Körper ergibt. Solche Marshall-Körper werden bei einer Verdichtungstemperatur von 130 bis 140°C verdichtet und mit einem Stempel von 5 cm² mit 52,5 kg bei 70°C belastet.

Es wird angenommen, daß bei dem erfindungsgemäßen Belagmaterial die umhüllenden modifizierten Polyolefine die Oberfläche der Mineralkörner 20 gegen Feuchtigkeit schützen und so die Haftung des Bitumen am Mineralkorn verbessern.

|  | Lieferkörnung | Gew.-% |
|---|---|---|
| 1. Kalksteinmehl | | 13 |
| 2. Basalt-Edelbrechsand | 0/2 | 14 |
| 3. Basalt-Edelsplitt | 2/5 | 14 |
| 4. Basalt-Edelsplitt | 5/8 | 44 |
| 5. Quarzit-Edelsplitt | 5/8 | 15 |

Siebanalyse

| mm | <0,09 | 0,25 | 0,71 | 2 | 5 | 8 | 11,2 | Summe |
|---|---|---|---|---|---|---|---|---|
| Gew.% | 12,4 | 3,5 | 3,2 | 9,0 | 21,8 | 46,2 | 3,9 | 100,0 |
| Siebdg.% | 12,4 | 15,9 | 19,1 | 28,1 | 49,9 | 96,1 | 100,0 | |
| | Füller | Sand = 15,7 Gew.-% | | | Anteile über 2 mm = 71,9 Gew.-% | | | |

Rohdichte des Mineralgemisches, 25 °C, 2,917 g/cm³

| Bindemittelsorte: | 93 % B 80 + 7 % Vestoplast | |
|---|---|---|
| Bindemittelanteil auf 100 Gew.-Tle. Mineral | Gew.-Tle. | 6,7 |
| Bindemittelgehalt im gesamten Mischgut | Gew.-% | 6,3 |
| Eigenschaften am Marshallkörper: | | |
| Raumdichte | g/cm³ | 2,494 |
| Mineralanteil | Vol.-% | 80,1 |
| Bindemittelanteil | Vol.-% | 15,5 |
| Hohlraum (ber.) | Vol.-% | 4,4 |
| Rohdichte des Mischgutes (ber.) | g/cm³ | 2,609 |
| Hohlraum des Mineralgerüstes | Vol.-% | 19,9 |
| mit Bindemittel ausgefüllt | % | 7,8 |
| Stabilität bei 60 °C | KN | 7,3 |
| Fliesswert bei 60 °C | $^1$/10 mm | 30–50 |

## Patentansprüche

1. Verfahren zur Erzeugung von Belagmaterial für Straßendecken und dergleichen mit folgenden Merkmalen:
körniges Mineral (20) in ausgewählten Korngrößen wird erhitzt;
das erhitzte, körnige Mineral (20) wird mit einem Ummantelungsmaterial (21) gemischt;
dem körnigen Mineral (20) wird Bitumen (22) als Bindemittel zugegeben;
in einem Mischer (9) werden das Mineral (20) und das Bitumen (22) vermischt;
gekennzeichnet durch folgende Maßnahmen:
das Ummantelungsmaterial (21), welches bei Raumtemperatur halbhart bis weich ist und bereits bei erhöhter Temperatur zum Kleben neigt, besteht aus amorphen Polyolefinen, die als Copolymere von α-Olefi-

nen mit ausgewählten Monomeren folgende Parameter aufweisen: Schmelzviskosität etwa 8000 mPa s (mit dem Rotationsviskometer bei etwa 190°C gemessen), Erweichungspunkt etwa 105°C (mit Ring und Kugel nach DIN 52011 gemessen), Penetration 20 (entsprechend DIN 52010), Brechpunkt –30°C (gemessen nach Fraaß, DIN 52012); die Zugabemenge des Ummantelungsmaterials (21) beträgt etwa 7% des Gesamtbindemittelgehaltes des Belagmaterials (23).

2. Verfahren nach Anspruch 1, dadurch gekennzeichnet, daß zur Umhüllung des erhitzten, körnigen Minerals (20) die amorphen Polyolefine auf eine Temperatur im Bereich zwischen 155 und 185°C gebracht werden.

3. Verfahren nach Anspruch 2, dadurch gekennzeichnet, daß die Anwendungstemperatur etwa 180°C beträgt.

4. Verfahren nach einem der Ansprüche 1 bis 3, dadurch gekennzeichnet, daß die Mischzeit zwischen Ummantelungsmaterial (21) und erhitztem Mineral (20) im Bereich zwischen 5 und 30 sec liegt.

5. Verfahren nach Anspruch 4, dadurch gekennzeichnet, daß die Mischungszeit etwa 10 sec beträgt.

6. Verfahren nach einem der Ansprüche 1 bis 5, dadurch gekennzeichnet, daß als Bitumen (22) die Qualität B80 verwendet wird.

7. Belagmaterial, hergestellt nach dem Verfahren gemäß einem der Ansprüche 1 bis 6.


## Claims

1. A process for producing surfacing material for road surfaces and the like, comprising the following features:

granular mineral (20) of selected grain sizes is heated;

the heated granular mineral (20) is mixed with an encasing material (21);

bitumen (22) is added as a binding agent to the granular mineral (20);

the mineral (20) and the bitumen (22) are mixed in a mixer (9);

characterized by the following features:

the encasing material (21) which is semi-hard to soft at ambient temperature and which already has a tendency to stick at elevated temperature comprises amorphous polyolefins which as copolymers of α-olefins with selected monomers have the following parameters: melt viscosity about 8000 mPa s (measured with a rotary viscosimeter at about 190°C), softening point about 105°C (measured with ring and ball in accordance with DIN 52011), penetration 20 (according to DIN 52010), breaking point –30°C (measured in accordance with Fraass, DIN 52012); the added amount of the encasing material (21) is about 7% of the total binding agent content of the surfacing material (23).

2. A process according to claim 1 characterised in that for encasing the heated granular mineral (20) the amorphous polyolefins are brought to a temperature in the range between 155 and 185°C.

3. A process according to claim 2 characterised in that the temperature of use is about 180°C.

4. A process according to one of claims 1 to 3 characterised in that the mixing time as between the encasing material (21) and the heated mineral (20) is in the range of between 5 and 30 sec.

5. A process according to claim 4 characterised in that the mixing time is about 10 sec.

6. A process according to one of claims 1 to 5 characterised in that the bitumen (22) used is of quality B80.

7. A surfacing material produced by the process according to one of claims 1 to 6.


## Revendications

1. Procédé de fabrication d'un matériau pour revêtements routiers et analogues présentant les caractéristiques suivantes:

un matériau minéral granulaire (20) de granulométrie sélectionnée est échauffé,

le matériau minéral granulaire échauffé (20) est mélangé à un matériau d'enrobage (21),

pour servir de liant on ajoute du bitume (22) au matériau minéral granulaire (20),

le matériau minéral (20) et le bitume (22) sont mélangés dans un malaxeur (9),

caractérisé par les points suivants:

le matériau d'enrobage (21) – qui, à la température ambiante est semi-dur à mou et tend à adhérer dès que la température s'élève – est composé de polyoléfines amorphes qui, en tant que copolymères d'oléfines alpha avec monomères sélectionnés présentent les paramètres ci-après:

viscosité de fusion, environ 8000 mPa s (mesuré dans un viscosimètre à rotation à la température approximative de 190°C) point de ramollissement, environ 105°C (mesuré selon DIN 52011 avec bague et bille), pénétration 20 (selon DIN 52010), point de rupture – 30°C (mesuré selon Fraass, DIN 52012), l'apport de matériau d'enrobage (21) atteint 7% environ de la teneur total de liant du matériau de revêtement (23).

2. Procédé selon la revendication 1, caractérisé par le fait que les polyoléfines amorphes sont amenée à une température comprise entre 155 et 185°C pour enrober le matériau minéral granulaire (20).

3. Procédé selon la revendication 2, caractérisé par le fait que la température d'application est d'environ 180°C.

4. Procédé selon l'une quelconque des revendications 1 à 3, caractérisé par le fait que la durée du mélange du matériau d'enrobage (21) et du matériau minéral échauffé (20) est compris entre 5 et 30 secondes.

5. Procédé selon la revendication 4, caractérisé par le fait que la durée du mélange est d'environ 10 secondes.

6. Procédé selon l'une quelconque des revendications 1 à 5, caractérisé par le fait que le bitume (22) est de la qualité B80.

7. Matériau de revêtement, caractérisé en ce qu'il est fabriqué conformément au procédé selon l'une quelconque des revendications 1 à 6.

FIG. 1

FIG. 2